# EUROPEAN PATENT APPLICATION

(11) **EP 4 808 017 A1**
(43) Date of publication of application: **16.09.2026**
(21) Application number: 24896246.6
(22) Date of filing: 11.11.2024
(51) Int. Cl.: H04B 10/112

(54) **OPTICAL COMMUNICATION DEVICE, OPTICAL COMMUNICATION SYSTEM, AND OPTICAL COMMUNICATION METHOD**

(30) Priority: 28.11.2023 CN 202311614305
(71) Applicant: Huawei Technologies Co., Ltd., Shenzhen, Guangdong 518129 (CN)
(72) Inventor: YANG, Ning, Shenzhen, Guangdong 518129 (CN); CAI, Meng, Shenzhen, Guangdong 518129 (CN); MA, Chuanhui, Shenzhen, Guangdong 518129 (CN)
(74) Representative: Pfenning, Meinig & Partner mbB
(86) International application number: PCT/CN2024/131306
(87) International publication number: WO 2025/113155

(57) **Abstract**

This application provides an optical communication device, an optical communication system, and an optical communication method. The optical communication device includes a beam deflector, a signal light detector, and a controller. The beam deflector is configured to receive first signal light from a peer optical communication device, and deflect the first signal light, to transmit the first signal light to the signal light detector. The signal light detector is configured to detect first position information of the first signal light incident on the signal light detector. The controller is configured to adjust, based on the first position information, an angle of deflection by the beam deflector for the first signal light, to implement beam alignment, where a divergence angle of the first signal light gradually decreases. In this application, a size of the optical communication device can be reduced, an internal structure of the device can be simplified, and low costs, light weight, and miniaturization of the optical communication device can be implemented.

## Description

This application claims priority to Chinese Patent Application No. 202311614305.7, filed with the China National Intellectual Property Administration on November 28, 2023 and entitled "OPTICAL COMMUNICATION DEVICE, OPTICAL COMMUNICATION SYSTEM, AND OPTICAL COMMUNICATION METHOD", which is incorporated herein by reference in its entirety.

### TECHNICAL FIELD

This application relates to the communication field, and more specifically, to an optical communication device, an optical communication system, and an optical communication method.

### BACKGROUND

Free space optical communication (free space optical communication, FSO) refers to a communication technology that uses light waves as a carrier to transfer information in vacuum or atmosphere. Acquisition, tracking, and pointing (acquisition, tracking, and pointing, ATP) is a key technology for implementing communication between two optical communication devices in a space optical communication system. In a conventional space optical communication system, an optical communication device typically has two lasers. One laser is for emitting beacon light that does not carry service information and has a large divergence angle, to implement an ATP process. The large divergence angle of the beacon light can facilitate the ATP process. The other laser is for emitting signal light that carries the service information and has a small divergence angle, to implement a communication function. The small divergence angle of the signal light can reduce a propagation loss of light in space. In other words, the beacon light and service light each use an independent light source, resulting in a complex structure, a large size, and high costs of the optical communication device.

### SUMMARY

Embodiments of this application provide an optical communication device, an optical communication system, and an optical communication method, so that a size of the optical communication device can be reduced, an internal structure of the device can be simplified, and low costs, light weight, and miniaturization of the optical communication device can be implemented.

According to a first aspect, an optical communication device is provided, and includes a beam deflector, a signal light detector, and a controller. The beam deflector is configured to receive first signal light from a peer optical communication device, and deflect the first signal light, to transmit the first signal light to the signal light detector. The signal light detector is configured to detect first position information of the first signal light incident on the signal light detector. The controller is configured to adjust, based on the first position information, an angle of deflection by the beam deflector for the first signal light, to implement beam alignment, where a divergence angle of the first signal light gradually decreases until reaching a first specified value.

Based on the optical communication device provided in this embodiment of this application, the beam deflector deflects the received first signal light, to transmit the first signal light to the signal light detector; and the signal light detector detects a position at which the first signal light is incident on the signal light detector, to obtain the first position information, and feeds back the first position information to the controller. The controller adjusts, based on the first position information, the angle of deflection by the beam deflector for the first signal light, to implement the beam alignment and complete an entire process of initial setup of a link.

Based on the foregoing settings, the optical communication device provided in this embodiment of this application can perform an ATP operation, for example, beam alignment, by using the signal light, and complete the process of initial setup of a link by using the signal light, so that the peer optical communication device does not need to additionally dispose a beacon light source and an auxiliary apparatus thereof. In this way, the internal structure of the optical communication device can be significantly simplified, the size of the optical communication device can be reduced, and weight and power consumption of the optical communication device can be decreased. As no beacon light detection module needs to be additionally disposed in an optical path structure, an FOV requirement of the optical path structure can be further reduced, and design complexity of the optical path structure and difficulty in device commissioning can be reduced. In this way, the low costs, light weight, and miniaturization of the optical communication device can be implemented, so that the optical communication device provided in this embodiment of this application can match a scenario requirement of a communication service like an inter-satellite or satellite-terrestrial communication service, and the optical communication device can be used in a more flexible manner in more scenarios, thereby facilitating promotion and application of a laser communication technology, and ensuring implementation of a wireless optical communication technology in a mobile communication industry.

In addition, in the process of initial setup of a link, the divergence angle of the signal light (that is, the first signal light) received by the optical communication device is configured to gradually decrease until reaching the first specified value, and then remain unchanged. In this way, based on the foregoing settings, both alignment efficiency and alignment accuracy can be balanced, that is, sufficient alignment accuracy can be ensured on the premise that alignment efficiency (an alignment speed) that is sufficient is ensured.

Optionally, the beam deflector may be an optical phased array, a fast steering mirror, a scanning galvanometer, a micromirror, a rotating mirror, or the like, but is not limited thereto.

For example, the beam deflector may be a liquid crystal-optical phased array, for example, a liquid crystal on silicon phased array. In addition, the beam deflector may alternatively be a MEMS-based optical phased array or an optical waveguide-based optical phased array.

Optionally, the signal light detector may be a position sensitive detector, a quadrant detector, a charge-coupled device, or a complementary metal oxide semiconductor camera, but is not limited thereto.

Optionally, the controller may be an independent controller specially disposed for controlling the beam deflector, or may be a general controller in the optical communication device. In addition to the beam deflector, the controller may further control another component. In this case, the controller may be a controller integrated as an integral structure, or may include a plurality of control units disposed in a distributed manner. This is not limited in this application.

Optionally, the first signal light may carry service information, or may not carry the service information. This is not limited in this application. For example, the first signal light does not carry any service information, that is, the first signal light may be used only for an ATP operation like the beam alignment.

Optionally, gradual decreasing of the divergence angle of the first signal light may be, for example, discrete or stepwise decreasing.

For example, a sending (receiving) phase of the first signal light may be divided into two phases. A divergence angle of the first signal light sent in a first phase may be a first angle, that is, the divergence angle of the first signal light in the first phase is the first angle and remains unchanged. Subsequently, a divergence angle of the first signal light sent in a second phase may be a second angle (that is, the first specified value), that is, the divergence angle of the first signal light in the second phase is the second angle and remains unchanged, and the first angle is greater than the second angle.

For another example, the sending (receiving) phase of the first signal light may be divided into three phases. A divergence angle of the first signal light sent in a first phase may be a first angle, a divergence angle of the first signal light sent in a second phase may be a second angle, and a divergence angle of the first signal light sent in a third phase may be a third angle (that is, the first specified value). The first angle is greater than the second angle, and the second angle is greater than the third angle. In addition, the sending (receiving) phase of the first signal light may also be divided into four, five, or more phases. In this case, more phases are in one-to-one correspondence with more divergence angles. Details are not described herein again.

Optionally, the gradual decreasing of the divergence angle of the first signal light may alternatively be that the divergence angle gradually decreases in a gradual transition manner until reaching the first specified value. For example, the divergence angle of the first signal light may gradually decrease at a slope rate, and a change of the divergence angle is represented as a straight line in time-divergence angle coordinate axes; or the divergence angle of the first signal light may gradually decrease smoothly, and a change of the divergence angle is represented as a curve in the time-divergence angle coordinate axes.

Optionally, the first specified value may be a divergence angle (denoted as a fourth angle) of signal light that is sent by the peer optical communication device and that is used for transmission of service information, that is, the first specified value is equal to the fourth angle. Alternatively, the first specified value may be greater than the fourth angle.

For example, after a procedure of initial setup of a link is completed, the optical communication device receives second signal light from the peer optical communication device, where the second signal light carries the service information, and a divergence angle (that is, the fourth angle) of the second signal light is smaller than or equal to the first specified value.

In a possible implementation, the optical communication device further includes a rotation platform and a motion sensor. The rotation platform is configured to carry the beam deflector and the signal light detector. The motion sensor is configured to detect jitter information of the beam deflector in a process in which the beam deflector receives the second signal light from the peer optical communication device, where the second signal light carries the service information. The controller is further configured to control, based on the jitter information, the rotation platform to drive the beam deflector to move to perform jitter compensation, to implement coarse tracking of the second signal light.

The optical communication device is usually installed at a high position like a tower, and is prone to jitter or vibration caused by factors such as weather (for example, wind or rain). The jitter affects the beam alignment, thereby affecting communication quality. In this embodiment of this application, the motion sensor is disposed to detect the jitter information of the beam deflector, so that the jitter compensation can be performed based on the jitter information, and coarse tracking of a beam is implemented without beacon light, thereby implementing stable data communication.

Optionally, the rotation platform may be a servo system or a gimbal, or may be a pan-tilt platform, for example, a miniature pan-tilt platform, so as to help reduce the overall size of the optical communication device.

Optionally, the motion sensor includes but is not limited to a Hall effect sensor, a magnetic encoder, an accelerometer, a gyroscope, or the like.

In a possible implementation, the signal light detector is further configured to detect second position information of the second signal light incident on the signal light detector. The controller is further configured to adjust, based on the second position information, an angle of deflection by the beam deflector for the second signal light, to implement fine tracking of the second signal light.

Based on the foregoing settings, fine tracking of a beam can be implemented without beacon light, to compensate for a residual of coarse tracking by the rotation platform, thereby implementing stable data communication.

In a possible implementation, the controller is further configured to control, based on spatial position information of the peer optical communication device, the rotation platform to drive the beam deflector to rotate, to enable the beam deflector to face the peer optical communication device.

Based on the foregoing settings, preliminary alignment between the beam deflector and the peer optical communication device can be completed, which lays a solid foundation for a subsequent procedure of performing the beam alignment by using the first signal light, and can improve efficiency of the subsequent alignment procedure.

In a possible implementation, the optical communication device further includes an optical splitter and a signal light transceiver, where the optical splitter is configured to transmit a part of the second signal light to the signal light detector, and transmit a remaining part of the second signal light to the signal light transceiver.

In a possible implementation, the optical communication device further includes the signal light transceiver. The signal light transceiver is configured to provide third signal light to the beam deflector. The beam deflector is further configured to deflect the third signal light, to send the third signal light to the peer optical communication device, where the third signal light is used for performing beam alignment with the peer optical communication device, and a divergence angle of the third signal light gradually decreases until reaching a second specified value.

In a possible implementation, the signal light transceiver includes: a fiber core array, configured to provide an initial optical signal; a collimator, configured to collimate the initial optical signal; and a spatial light modulator, configured to modulate the collimated initial optical signal to generate the third signal light.

In a possible implementation, the signal light transceiver includes: a single-mode optical fiber, configured to provide an initial optical signal; and an optical phased array, configured to modulate the initial optical signal to generate the third signal light.

In a possible implementation, the beam deflector includes the optical phased array, a fast steering mirror, or a scanning galvanometer.

In a possible implementation, the signal light detector includes a position sensitive detector, a quadrant detector, a charge-coupled device, or a complementary metal oxide semiconductor camera.

According to a second aspect, an optical communication system is provided, and includes the optical communication device and the peer optical communication device provided in any possible implementation of the foregoing first aspect, where the optical communication device communicates with the peer optical communication device through spatial light.

According to a third aspect, an optical communication method is provided, and is applied to an optical communication device. The optical communication device includes a beam deflector, a signal light detector, and a controller. The optical communication method includes: receiving, by the beam deflector, first signal light from a peer optical communication device, and deflecting the first signal light, to transmit the first signal light to the signal light detector; detecting, by the signal light detector, first position information of the first signal light incident on the signal light detector; and adjusting, by the controller, based on the first position information, an angle of deflection by the beam deflector for the first signal light, to implement beam alignment, where a divergence angle of the first signal light gradually decreases until reaching a first specified value.

In a possible implementation, the optical communication device further includes a rotation platform and a motion sensor. The rotation platform is configured to carry the beam deflector and the signal light detector. The optical communication method further includes: detecting, by the motion sensor, jitter information of the beam deflector in a process in which the beam deflector receives second signal light from the peer optical communication device, where the second signal light carries service information; and controlling, by the controller, based on the jitter information, the rotation platform to drive the beam deflector to move to perform jitter compensation, to implement coarse tracking of the second signal light.

In a possible implementation, the optical communication method further includes: detecting, by the signal light detector, second position information of the second signal light incident on the signal light detector; and adjusting, by the controller, based on the second position information, an angle of deflection by the beam deflector for the second signal light, to implement fine tracking of the second signal light.

In a possible implementation, before receiving, by the beam deflector, the first signal light from the peer optical communication device, the optical communication method further includes: controlling, by the controller, based on spatial position information of the peer optical communication device, the rotation platform to drive the beam deflector to rotate, to enable the beam deflector to face the peer optical communication device.

In a possible implementation, the optical communication device further includes a signal light transceiver, and the optical communication method further includes: providing, by the signal light transceiver, third signal light to the beam deflector; and deflecting, by the beam deflector, the third signal light, to send the third signal light to the peer optical communication device, where the third signal light is used for performing beam alignment with the peer optical communication device, and a divergence angle of the third signal light gradually decreases until reaching a second specified value.

### BRIEF DESCRIPTION OF DRAWINGS

FIG. 1 is a diagram of a structure of an optical communication system according to an embodiment of this application;
FIG. 2 is a diagram of a structure of an example of an optical communication device according to an embodiment of this application;
FIG. 3 is a diagram of a structure of another example of an optical communication device according to an embodiment of this application;
FIG. 4 is a diagram of a structure of still another example of an optical communication device according to an embodiment of this application; and
FIG. 5 is a schematic flowchart of an optical communication method according to an embodiment of this application.

### Reference numerals:

10. beam deflector; 20. signal light detector; 30. controller; 40. rotation platform; 50. motion sensor; 60. optical splitter; 70. signal light transceiver; 71. fiber core array; 72. collimator; 73. spatial light modulator; 74. single-mode optical fiber; 75. optical phased array;
100. optical communication device; 200. optical communication device; 300. optical communication device; 400. tower.

### DESCRIPTION OF EMBODIMENTS

The following describes implementations of this application in detail. Examples of the implementations are shown in the accompanying drawings. Same or similar reference signs are always used to represent same or similar elements or elements having same or similar functions. The implementations described below with reference to the accompanying drawings are examples, and are merely used to explain this application, but cannot be understood as a limitation on this application.

In the descriptions of this application, it should be noted that, unless otherwise specified and limited, terms "installation" and "connection" should be understood in a broad sense. For example, a connection may be a fixed connection, a detachable connection, or an integral connection; may be a mechanical connection, or an electrical connection, or may mean mutual communication; and may be a direct connection, or an indirect connection through an intermediate medium, or may be an internal connection between two elements or an interaction relationship between two elements. A person of ordinary skill in the art may interpret specific meanings of the foregoing terms in this application according to specific cases.

In the descriptions of this application, it should be understood that orientation or position relationships indicated by the terms such as "upper", "lower", "side", "front", and "rear" are based on orientation or position relationships of mounting, and are used only for ease and brevity of illustration and descriptions of this application, rather than indicating or implying that the mentioned apparatus or component needs to have a particular orientation or needs to be constructed and operated in a particular orientation. Therefore, such terms should not be construed as limiting of this application.

It should be further noted that in embodiments of this application, a same reference numeral indicates a same component or a same part. For same parts in embodiments of this application, only one part or component marked with a reference numeral may be used as an example in the figure. It should be understood that the reference numeral is also applicable to another same part or component.

With large-scale commercial use of 5^{th} generation (5^{th} generation, 5G) communication, research on 6^{th} generation (6^{th} generation, 6G) communication technologies has been widely carried out. In China, U6G is officially marked as the symbol spectrum of 6G communication, while in North America, centimeter wave is selected as the main spectrum of 6G communication. All these mean larger bandwidth and more streams, making expected traffic of base stations reach a level of 100 Gbps. For such a large volume of wireless backhaul services, a traditional microwave backhaul capability is difficult to continuously evolve. In addition, feasibility of evolution from distributed access network (distributed-radio access network, D-RAN) to centered access network (centered-radio access network, C-RAN) is widely discussed in the industry, and there are clear technical requirements for wireless fronthaul. Therefore, research on wireless backhaul and fronthaul technologies with larger capacity has a broad application prospect.

In this technical background, compared with microwave frequency bands, light waves have significant bandwidth advantages, and can support continuous evolution of wireless backhaul and fronthaul capacities, becoming a golden spectrum in the 6G era. Free space optical communication (free space optical communication, FSO) refers to a communication technology that uses light waves as a carrier to transfer information in vacuum or atmosphere. Acquisition, tracking, and pointing (acquisition, tracking, and pointing, ATP) is a key technology for implementing communication between two optical communication devices in a space optical communication system.

In a conventional space optical communication system, an optical communication device usually has two lasers. One laser is for emitting beacon light that does not carry service information and has a large divergence angle, to implement an ATP process. The large divergence angle of the beacon light can facilitate the ATP process. The other laser is for emitting signal light that carries the service information and has a small divergence angle, to implement a communication function. The small divergence angle of the signal light can reduce a propagation loss of light in space. In other words, the beacon light and service light each use an independent light source, resulting in a complex structure, a large size, and high costs of the optical communication device, and it is difficult to meet a scenario requirement of a communication service like an inter-satellite or satellite-terrestrial communication service.

In view of this, an embodiment of this application provides an optical communication device, which can perform an ATP operation, for example, beam alignment, by using signal light, and complete a process of initial setup of a link by using the signal light, so that the optical communication device does not need to additionally dispose a beacon light source and an auxiliary apparatus thereof. In this way, an internal structure of the optical communication device can be significantly simplified, a size of the optical communication device can be reduced, and weight and power consumption of the optical communication device can be decreased. Low costs, light weight, and miniaturization of the optical communication device can be implemented, so that the optical communication device provided in this embodiment of this application can match a scenario requirement of a communication service like an inter-satellite or satellite-terrestrial communication service, and the optical communication device can be used in a more flexible manner in more scenarios, thereby facilitating promotion and application of a laser communication technology, and ensuring implementation of a wireless optical communication technology in a mobile communication industry.

The optical communication device provided in this embodiment of this application may be used in an optical communication system. The optical communication device may be, for example, any device like a communication satellite, a base station, an access point (access point, AP), or a station (station, STA) in the optical communication system. The following first describes the optical communication system.

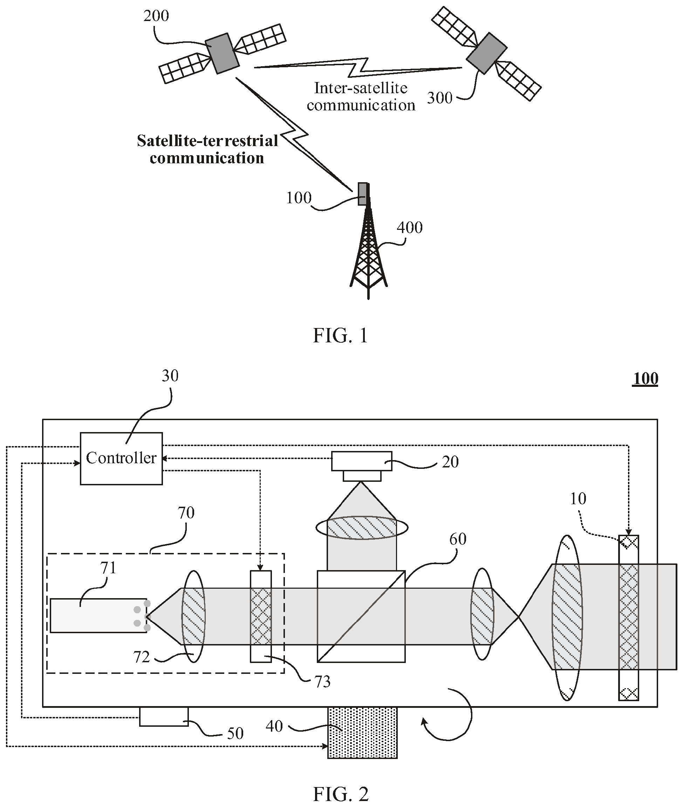

FIG. 1 is a diagram of a structure of an optical communication system according to an embodiment of this application. As shown in FIG. 1, the optical communication system includes an optical communication device 100, an optical communication device 200, and an optical communication device 300. The optical communication device 100 may be a ground device, and can perform optical communication with the optical communication device 200 or the optical communication device 300 located in space. The optical communication device 100 may be, for example, a base station, an AP, or an STA, and the optical communication device 200 and the optical communication device 300 may be, for example, a communication satellite. The optical communication device 100 may be disposed on the top of a tower 400, a high-rise building, or a utility pole, so as to obtain a better communication field of view. As the optical communication device 100 is located on the ground, and the optical communication device 200 and the optical communication device 300 are located in space, communication between the optical communication device 100 and the optical communication device 200 may be referred to as satellite-terrestrial communication, and communication between the optical communication device 200 and the optical communication device 300 may be referred to as inter-satellite communication.

In this embodiment of this application, the optical communication device 100 may receive first signal light sent by the optical communication device 200, and complete an ATP operation, for example, beam alignment, by using the first signal light, to complete a process of initial setup of a link. The first signal light may have a large divergence angle, so as to implement fast beam alignment. The first signal light may be used only for the ATP operation, and does not carry any service information. After a link is set up, optical communication devices at two ends may use a beam with a smaller divergence angle to transfer service information, so as to reduce a propagation loss of light in space. For example, the optical communication device 100 may receive second signal light from the optical communication device 200, where the second signal light carries the service information, and a divergence angle of the second signal light is smaller than the divergence angle of the first signal light.

Further, the optical communication device 100 continuously receives the first signal light from the optical communication device 200 in the entire process of initial setup of a link. In this process, the divergence angle of the first signal light does not remain unchanged. In this embodiment of this application, it may be configured or agreed on in advance in a communication system or a protocol that the divergence angle of the first signal light received by the optical communication device 100 gradually decreases until reaching a first specified value. Through the foregoing settings, both alignment efficiency and alignment accuracy can be balanced.

Specifically, in an initial stage, the divergence angle of the first signal light received by the optical communication device 100 is large, and the large divergence angle makes the first signal light have a large light spot. The large light spot may reduce a probability of missed scans in a scanning process of a beam. In this case, the optical communication device 100 can quickly capture the first signal light, and implement coarse alignment of the beam. In a subsequent stage, the divergence angle of the first signal light received by the optical communication device 100 is small, and the small divergence angle makes the first signal light have a small light spot. The small light spot helps improve the alignment accuracy. In this case, the optical communication device 100 can implement fine alignment of the beam. As a sending process continues, the divergence angle of the first signal light gradually decreases until reaching the first specified value, and then the divergence angle remains unchanged. The first specified value may be a divergence angle of signal light when the signal light is used for transmitting the service information. For example, the first specified value may be the divergence angle of the foregoing second signal light. Gradual decreasing of the divergence angle of the first signal light may be, for example, discrete or stepwise decreasing.

Similarly, in the foregoing process of initial setup of a link, the optical communication device 100 may send third signal light to the optical communication device 200, where the third signal light is used by the optical communication device 200 for performing beam alignment, and the third signal light may be used only for the ATP operation without carrying any service information. A divergence angle of the third signal light gradually decreases until reaching a second specified value, so that both alignment efficiency and alignment accuracy of the optical communication device 200 can be balanced. The second specified value may be the same as or different from the first specified value. This may be specified in a communication system or a protocol.

The following describes a specific structure of the optical communication device in this embodiment of this application with reference to the accompanying drawing and by using the optical communication device 100 as an example. FIG. 2 is a diagram of a structure of an example of an optical communication device 100 according to an embodiment of this application.

As shown in FIG. 2, the optical communication device 100 provided in this embodiment of this application includes a beam deflector 10, a signal light detector 20, and a controller 30. The beam deflector 10 is configured to receive first signal light from a peer optical communication device (for example, an optical communication device 200), and deflect the first signal light, to transmit the first signal light to the signal light detector 20. The signal light detector 20 is configured to detect first position information of the first signal light incident on the signal light detector 20. The controller 30 is configured to adjust, based on the first position information, an angle of deflection by the beam deflector 10 for the first signal light, to implement beam alignment, where a divergence angle of the first signal light gradually decreases until reaching a first specified value.

Specifically, the controller 30 may control the beam deflector 10 to perform beam scanning (for example, spiral scanning) until the first signal light sent by the peer optical communication device is detected. The beam deflector 10 deflects the received first signal light, to transmit the first signal light to the signal light detector 20. The signal light detector 20 detects a position at which the first signal light is incident on a receive field of view of the signal light detector 20, to obtain the first position information, and feeds back the first position information to the controller 30. The controller 30 adjusts, based on the first position information, the angle of deflection by the beam deflector 10 for the first signal light, so that a light spot of the first signal light can gradually approach or reach a position center of the receive field of view of the signal light detector 20.

That the signal light detector 20 detects the first position information of the first signal light in the receive field of view, and that the controller 30 adjusts, based on the first position information, the angle of deflection by the beam deflector 10 for the first signal light may be continuously performed in a plurality of periodicities or rounds, that is, beam alignment is gradually completed in a dynamic adjustment process. In an entire alignment process, a focal length corresponding to the receive field of view may be gradually increased, that is, an uncertain area is continuously narrowed down, so that the deflection angle can be continuously adjusted based on the position information. In other words, the position of the first signal light in the receive field of view is continuously adjusted, so that alignment accuracy can be continuously improved until reaching an alignment accuracy threshold, and the entire beam alignment process is completed, that is, an entire process of initial setup of a link is completed.

Further, in this embodiment of this application, the divergence angle of the first signal light received by the optical communication device 100 gradually decreases until reaching the first specified value.

In this way, in an initial stage, the divergence angle of the first signal light received by the optical communication device 100 is large, and the large divergence angle makes the first signal light have a large light spot. The large light spot may reduce a probability of missed scans in a scanning process of a beam. In this case, the optical communication device 100 can quickly capture the first signal light, and implement coarse alignment of the beam. In a subsequent stage, the divergence angle of the first signal light received by the optical communication device 100 is small, and the small divergence angle makes the first signal light have a small light spot. The small light spot helps improve the alignment accuracy. In this case, the optical communication device 100 can implement fine alignment of the beam. As a sending process continues, the divergence angle of the first signal light gradually decreases until reaching the first specified value, and then the divergence angle of the first signal light remains unchanged. In this way, based on the foregoing settings, both alignment efficiency and alignment accuracy can be balanced, that is, sufficient alignment accuracy can be ensured on the premise that alignment efficiency (an alignment speed) that is sufficient is ensured.

Based on the optical communication device 100 provided in this embodiment of this application, the beam deflector 10 deflects the received first signal light, to transmit the first signal light to the signal light detector 20; and the signal light detector 20 detects the position at which the first signal light is incident on the signal light detector 20, to obtain the first position information, and feeds back the first position information to the controller 30. The controller 30 adjusts, based on the first position information, the angle of deflection by the beam deflector 10 for the first signal light, to implement the beam alignment and complete the entire process of initial setup of a link.

Based on the foregoing settings, the optical communication device 100 provided in this embodiment of this application can perform an ATP operation, for example, beam alignment, by using the signal light, and complete the process of initial setup of a link by using the signal light, so that the peer optical communication device does not need to additionally dispose a beacon light source and an auxiliary apparatus thereof. In this way, an internal structure of the optical communication device can be significantly simplified, a size of the optical communication device can be reduced, and weight and power consumption of the optical communication device can be decreased. As no beacon light detection module needs to be additionally disposed in an optical path structure, a field of view (field of view, FOV) requirement of the optical path structure can be further reduced, and design complexity of the optical path structure and difficulty in device commissioning can be reduced. In this way, the low costs, light weight, and miniaturization of the optical communication device can be implemented, so that the optical communication device provided in this embodiment of this application can match a scenario requirement of a communication service like an inter-satellite or satellite-terrestrial communication service, and the optical communication device can be used in a more flexible manner in more scenarios, thereby facilitating promotion and application of a laser communication technology, and ensuring implementation of a wireless optical communication technology in a mobile communication industry.

In addition, in the process of initial setup of a link, the divergence angle of the signal light (that is, the first signal light) received by the optical communication device 100 is configured to gradually decrease until reaching the first specified value, and then remain unchanged. In this way, based on the foregoing settings, both alignment efficiency and alignment accuracy can be balanced, that is, sufficient alignment accuracy can be ensured on the premise that alignment efficiency (an alignment speed) that is sufficient is ensured.

Optionally, the beam deflector 10 may be an optical phased array (optical phased array, OPA), a fast steering mirror (fast steering mirror, FSM), a scanning galvanometer, a micro electro mechanical system (micro electro mechanical system, MEMS) micromirror, a rotating mirror, or the like, but is not limited thereto.

As shown in FIG. 2, in this embodiment of this application, the beam deflector 10 may be a liquid crystal-optical phased array (liquid crystal-optical phased array, LC-OPA), for example, a liquid crystal on silicon phased array. In another embodiment, the beam deflector 10 may alternatively be a MEMS-based optical phased array or an optical waveguide-based optical phased array.

Optionally, the signal light detector 20 may be a position sensitive detector (position sensitive detector, PSD), a quadrant detector (quadrant detector, QD), a charge-coupled device (charge-coupled device, CCD), or a complementary metal oxide semiconductor (complementary metal oxide semiconductor, CMOS) camera, but is not limited thereto.

Optionally, the controller 30 may be an independent controller specially disposed for controlling the beam deflector 10, or may be a general controller in the optical communication device 100. In addition to the beam deflector 10, the controller 30 may further control another component. In this case, the controller 30 may be a controller integrated as an integral structure, or may include a plurality of control units disposed in a distributed manner. This is not limited in this application.

Optionally, the first signal light may carry service information, or may not carry the service information. This is not limited in this application. For example, the first signal light does not carry any service information, that is, the first signal light may be used only for an ATP operation like the beam alignment.

In this embodiment of this application, the divergence angle of the first signal light does not remain unchanged. As a sending process continues, the divergence angle of the first signal light gradually decreases until reaching the first specified value, and then the divergence angle remains unchanged.

Optionally, gradual decreasing of the divergence angle of the first signal light may be, for example, discrete or stepwise decreasing.

For example, a sending (receiving) phase of the first signal light may be divided into two phases. A divergence angle of the first signal light sent in a first phase may be a first angle, that is, the divergence angle of the first signal light in the first phase is the first angle and remains unchanged. Subsequently, a divergence angle of the first signal light sent in a second phase may be a second angle (that is, the first specified value), that is, the divergence angle of the first signal light in the second phase is the second angle and remains unchanged, and the first angle is greater than the second angle.

For another example, the sending (receiving) phase of the first signal light may be divided into three phases. A divergence angle of the first signal light sent in a first phase may be a first angle, a divergence angle of the first signal light sent in a second phase may be a second angle, and a divergence angle of the first signal light sent in a third phase may be a third angle (that is, the first specified value). The first angle is greater than the second angle, and the second angle is greater than the third angle. In addition, the sending (receiving) phase of the first signal light may also be divided into four, five, or more phases. In this case, more phases are in one-to-one correspondence with more divergence angles. Details are not described herein again.

Optionally, the gradual decreasing of the divergence angle of the first signal light may alternatively be that the divergence angle gradually decreases in a gradual transition manner until reaching the first specified value. For example, the divergence angle of the first signal light may gradually decrease at a slope rate, and a change of the divergence angle is represented as a straight line in time-divergence angle coordinate axes; or the divergence angle of the first signal light may gradually decrease smoothly, and a change of the divergence angle is represented as a curve in the time-divergence angle coordinate axes.

Optionally, the first specified value may be a divergence angle (denoted as a fourth angle) of signal light that is sent by the peer optical communication device and that is used for transmission of service information, that is, the first specified value is equal to the fourth angle. Alternatively, the first specified value may be greater than the fourth angle.

For example, after a procedure of initial setup of a link is completed, the optical communication device 100 receives second signal light from the peer optical communication device, where the second signal light carries the service information, and a divergence angle (that is, the fourth angle) of the second signal light is smaller than or equal to the first specified value.

Further, as shown in FIG. 2, the optical communication device 100 further includes a rotation platform 40 and a motion sensor 50. Components such as the beam deflector 10 and the signal light detector 20 are carried (installed) on the rotation platform 40. The motion sensor 50 is configured to detect jitter information of the beam deflector 10 in a process in which the beam deflector 10 receives the second signal light from the peer optical communication device. The controller 30 is further configured to control, based on the jitter information, the rotation platform 40 to drive the beam deflector 10 to move to perform jitter compensation, to implement coarse tracking of the second signal light.

Specifically, both the beam deflector 10 and the signal light detector 20 are securely disposed on the rotation platform 40, and positions of the beam deflector 10 and the signal light detector 20 are relatively fixed. The rotation platform 40 can drive the beam deflector 10 and the signal light detector 20 installed thereon to rotate. The motion sensor 50 may detect the jitter information of the beam deflector 10, and feed back the jitter information to the controller 30. The controller 30 calculates reverse motion data (that is, jitter compensation data) based on the jitter information, and sends the reverse motion data to the rotation platform 40, to control the rotation platform 40 to drive, based on the reverse motion data, the beam deflector 10 to perform reverse motion (for example, reverse rotation), to implement jitter compensation, thereby implementing coarse tracking of a beam, and ensuring sufficient stability of data communication.

The optical communication device 100 is usually installed at a high position like a tower 400, and is prone to jitter or vibration caused by factors such as weather (for example, wind or rain). The jitter affects the beam alignment, thereby affecting communication quality. In this embodiment of this application, the motion sensor 50 is disposed to detect the jitter information of the beam deflector 10, so that the jitter compensation can be performed based on the jitter information, and the coarse tracking of the beam is implemented without beacon light, thereby implementing stable data communication.

Optionally, as the beam deflector 10 is fastened to the rotation platform 40 and the like, that the motion sensor 50 detects the jitter information of the beam deflector 10 may alternatively be detecting jitter information of the rotation platform 40, or may be detecting overall jitter information of the optical communication device 100, or may be detecting jitter information of the signal light detector 20.

Optionally, the rotation platform 40 may be a servo system or a gimbal, or may be a pan-tilt platform, for example, a miniature pan-tilt platform, so as to help reduce an overall size of the optical communication device 100.

Optionally, the motion sensor 50 includes but is not limited to a Hall effect sensor, a magnetic encoder, an accelerometer, a gyroscope, or the like.

Further, in this embodiment of this application, the signal light detector 20 is further configured to detect second position information of the second signal light incident on the signal light detector 20. The controller 30 is further configured to adjust, based on the second position information, an angle of deflection by the beam deflector 10 for the second signal light, to implement fine tracking of the second signal light.

Specifically, the signal light detector 20 detects a position at which the second signal light is incident on a receive field of view of the signal light detector 20, to obtain the second position information, and feeds back the second position information to the controller 30. The controller 30 adjusts, based on the second position information, the angle of deflection by the beam deflector 10 for the second signal light, so that a light spot of the second signal light can gradually approach or reach a position center of the receive field of view of the signal light detector 20, thereby implementing fine tracking of the beam.

Based on the foregoing settings, the fine tracking of the beam can be implemented without beacon light, to compensate for a residual of coarse tracking by the rotation platform 40, thereby implementing stable data communication.

Further, as shown in FIG. 2, the optical communication device 100 further includes an optical splitter 60 and a signal light transceiver 70, where the optical splitter 60 is configured to transmit a part of the second signal light to the signal light detector 20, and transmit a remaining part of the second signal light to the signal light transceiver 70.

The signal light transceiver 70 is configured to provide signal light to be transmitted, and receive signal light, for example, the second signal light, from the peer optical communication device. The optical splitter 60 may be, for example, a beam splitter mirror, and may transmit (for example, reflect) a small part of the second signal light to the signal light detector 20, so that the signal light detector 20 can implement fine tracking based on the second signal light. The optical splitter 60 may further transmit (for example, perform transmittance of) a large remaining part of the second signal light to the signal light transceiver 70, and the signal light transceiver 70 receives the second signal light that carries service information, so as to implement a communication function.

Further, in this embodiment of this application, at a beginning stage of initial setup of a link, the controller 30 is further configured to control, based on spatial position information (for example, spatial coordinates) of the peer optical communication device, the rotation platform 40 to drive the beam deflector 10 to rotate, so that a light incident surface of the beam deflector 10 faces toward the peer optical communication device. Based on the foregoing settings, preliminary alignment between the beam deflector 10 and the peer optical communication device can be completed, which lays a solid foundation for a subsequent procedure of performing beam alignment by using the first signal light, and can improve efficiency of the subsequent alignment procedure.

Optionally, the spatial position information may be obtained through global positioning system (global positioning system, GPS) navigation or BeiDou navigation. In other words, the spatial position information may be GPS positioning information or BeiDou positioning information. The spatial position information may be preconfigured in a memory in the optical communication device 100, or may be obtained at another position through a wireless communication means.

Further, as shown in FIG. 2, the optical communication device 100 further includes the signal light transceiver 70. The signal light transceiver 70 is configured to provide third signal light to the beam deflector 10. The beam deflector 10 is further configured to deflect the third signal light, to send the third signal light to the peer optical communication device, where the third signal light is used for performing beam alignment with the peer optical communication device, and a divergence angle of the third signal light gradually decreases until reaching a second specified value.

The third signal light is used for performing beam alignment with the peer optical communication device. A specific alignment process is the same as a process in which the optical communication device 100 performs beam alignment (pointing) by using the first signal light, and details are not described herein again. The third signal light may be used only for the ATP operation, and does not carry any service information. The divergence angle of the third signal light gradually decreases until reaching the second specified value, so that both alignment efficiency and alignment accuracy of the peer optical communication device can be balanced. The second specified value may be the same as the first specified value.

As shown in FIG. 2, in this embodiment of this application, the signal light transceiver 70 includes a fiber core array 71, a collimator 72, and a spatial light modulator (spatial light modulation, SLM) 73. The fiber core array 71 is configured to provide an initial optical signal; the collimator 72 is configured to collimate the initial optical signal; and the spatial light modulator 73 is configured to modulate the collimated initial optical signal to generate the third signal light.

Specifically, the fiber core array 71 is connected to a laser (not shown in the figure) configured to generate initial signal light. The fiber core array 71 includes a plurality of fiber cores, where one fiber core (for example, a fiber core located at a central position) may provide the initial optical signal. The collimator 72 receives the initial optical signal and collimates the initial optical signal. The spatial light modulator 73 receives the collimated initial optical signal, and performs wavefront phase control on the initial optical signal, to implement beamwidth modulation, that is, modulate a divergence angle of a beam. For example, a beam with a wide divergence angle is adaptively generated, so as to generate the third signal light that meets a requirement.

In this application, the fiber core array 71 is configured to receive and transmit the beam. If an atmospheric channel is stable, received signal light may be focused on the fiber core at the central position of the fiber core array, and the fiber core is equivalent to a single-mode optical fiber. If the atmospheric channel is unstable, a light spot of the signal light may be distorted. In this case, the signal light may be jointly received by a plurality of fiber cores, that is, the fiber core array can be used for receiving, to improve coupling efficiency. In other words, in this application, based on the foregoing settings, not only an objective of sharing an optical fiber for signal light receiving and sending can be met, but also a problem of low coupling efficiency caused by atmospheric turbulence can be resolved.

Optionally, if the atmospheric channel is unstable, the light spot of the signal light may be distorted. In this case, the spatial light modulator 73 may be powered on to compensate for a part of phase distortion, so as to improve the coupling efficiency of the fiber core array 71 for the beam.

Optionally, if the atmospheric channel is unstable, the third signal light generated through modulation by the spatial light modulator 73 may be a non-Gaussian waveform. For example, in this case, the third signal light may be modulated to be a structured beam, to improve transmission performance. The structured beam may be, for example, a blade-like beam, a Mathieu beam, an Airy beam, or a Bessel beam.

Optionally, the spatial light modulator 73 may be a liquid crystal SLM, an electro-optic SLM, or the like, but is not limited thereto.

Optionally, the optical communication device 100 provided in this embodiment of this application may further include another optical element that is not listed. For example, at least one optical lens may be disposed between the signal light detector 20 and the optical splitter 60, and at least one optical lens (for example, two lenses) may be disposed between the optical splitter 60 and the beam deflector 10, to meet a specific optical requirement. This is not limited in this application.

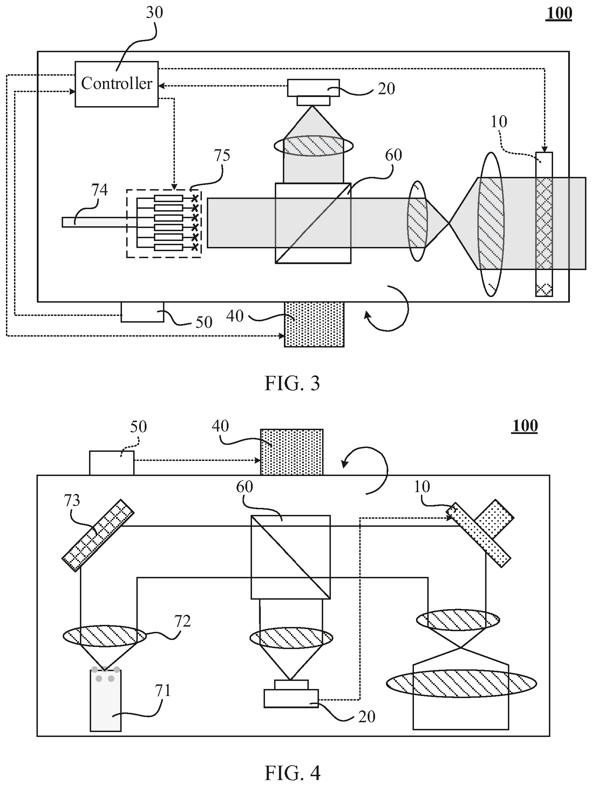

FIG. 3 is a diagram of a structure of another example of an optical communication device 100 according to an embodiment of this application. As shown in FIG. 3, in this embodiment of this application, a signal light transceiver 70 includes a single-mode optical fiber 74 and an optical phased array 75. The single-mode optical fiber 74 is configured to provide an initial optical signal; and the optical phased array 75 is configured to modulate the initial optical signal to generate third signal light.

Specifically, the single-mode optical fiber 74 provides the initial optical signal, the optical phased array 75 includes a plurality of optical phase shifters and a plurality of optical antennas, where the plurality of optical phase shifters and the plurality of optical antennas are disposed in one-to-one correspondence. After receiving the initial optical signal, the optical phased array 75 performs wavefront phase control on the initial optical signal, to implement beamwidth modulation, that is, modulate a divergence angle of a beam. For example, a beam with a wide divergence angle is adaptively generated, so as to generate the third signal light that meets a requirement.

In this application, the single-mode optical fiber 74 is configured to receive and transmit the beam. If an atmospheric channel is stable, received signal light may be efficiently focused on the single-mode optical fiber 74. If the atmospheric channel is unstable, the optical phased array 75 may be configured to perform compensation on a light spot phase, improving coupling efficiency of the single-mode optical fiber 74.

FIG. 4 is a diagram of a structure of still another example of an optical communication device 100 according to an embodiment of this application. As shown in FIG. 4, in this embodiment of this application, a beam deflector 10 may be a fast steering mirror or a scanning galvanometer. In this case, a plurality of optical lenses may be disposed at a front end of the beam deflector 10, to implement beam reduction processing. In other words, signal light from a peer optical communication device may first undergo the beam reduction processing, and then be incident on the beam deflector 10.

As shown in FIG. 4, in this embodiment of this application, a controller 30 may include a plurality of control units disposed in a distributed manner. One of the control units is integrated into a signal light detector 20, so that the signal light detector 20 can directly control the beam deflector 10 based on detected position information, to implement beam alignment or fine tracking. Another control unit is integrated into a rotation platform 40, so that the rotation platform 40 can directly rotate based on jitter information from a motion sensor 50, to achieve an objective of jitter compensation.

With reference to the optical communication device provided in the foregoing embodiments, an embodiment of this application further provides an optical communication method. The optical communication method may be applied to the optical communication device provided in the foregoing embodiments, or applied to a chip in the optical communication device. The following is a method embodiment provided in this application. The method embodiment corresponds to the foregoing product (device) embodiments.

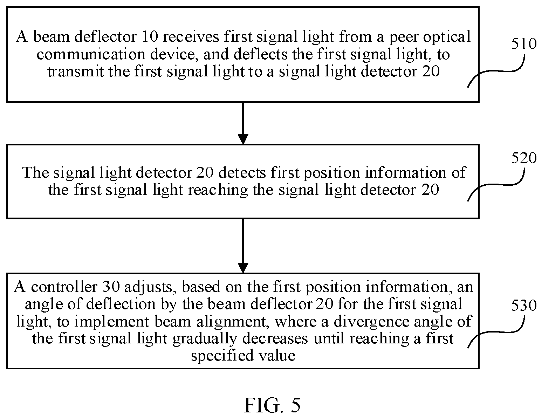

FIG. 5 is a flowchart of an optical communication method according to an embodiment of this application. The optical communication method is applied to an optical communication device. The optical communication device includes a beam deflector 10, a signal light detector 20, and a controller 30. With reference to the foregoing related content in FIG. 2 to FIG. 4, the optical communication method includes the following steps:
Step 510: The beam deflector 10 receives first signal light from a peer optical communication device, and deflects the first signal light, to transmit the first signal light to the signal light detector 20.
Step 520: The signal light detector 20 detects first position information of the first signal light incident on the signal light detector 20.
Step 530: The controller 30 adjusts, based on the first position information, an angle of deflection by the beam deflector 10 for the first signal light, to implement beam alignment, where a divergence angle of the first signal light gradually decreases.

Optionally, the optical communication device further includes a rotation platform 40 and a motion sensor 50, where the rotation platform 40 is configured to carry the beam deflector 10 and the signal light detector 20, and the optical communication method further includes:
detecting, by the motion sensor 50, jitter information of the beam deflector 10 in a process in which the beam deflector 10 receives second signal light from the peer optical communication device, where the second signal light carries service information; and
controlling, by the controller 30, based on the jitter information, the rotation platform 40 to drive the beam deflector 10 to move to perform jitter compensation, so as to implement coarse tracking of the second signal light.

Optionally, the optical communication method further includes:
detecting, by the signal light detector 20, second position information of the second signal light incident on the signal light detector 20; and
adjusting, by the controller 30, based on the second position information, an angle of deflection by the beam deflector 10 for the second signal light, to implement fine tracking of the second signal light.

Optionally, before receiving, by the beam deflector 10, the first signal light from the peer optical communication device, that is, before step 510, the optical communication method further includes:
controlling, by the controller 30, based on spatial position information of the peer optical communication device, the rotation platform 40 to drive the beam deflector 10 to rotate, to enable the beam deflector 10 to face the peer optical communication device.

Optionally, the optical communication device further includes a signal light transceiver 70, and the optical communication method further includes:
providing, by the signal light transceiver 70, third signal light to the beam deflector 10; and
deflecting, by the beam deflector 10, the third signal light, to send the third signal light to the peer optical communication device, where the third signal light is used for performing beam alignment with the peer optical communication device, and a divergence angle of the third signal light gradually decreases.

For descriptions of the optical communication method shown in FIG. 5, refer to the foregoing descriptions of corresponding content. Details are not described herein again.

An embodiment of this application further provides a computer-readable storage medium. The computer-readable storage medium has a computer program stored therein. When the computer program is run on an optical communication device, the optical communication device is enabled to perform the optical communication method provided in the foregoing embodiments.

An embodiment of this application further provides a computer program product, including computer program code. When the computer program code is run on an optical communication device, the optical communication device is enabled to perform the optical communication method provided in the foregoing embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical communication device, comprising a beam deflector (10), a signal light detector (20), and a controller (30), wherein
the beam deflector (10) is configured to receive first signal light from a peer optical communication device, and deflect the first signal light, to transmit the first signal light to the signal light detector (20);
the signal light detector (20) is configured to detect first position information of the first signal light incident on the signal light detector (20); and
the controller (30) is configured to adjust, based on the first position information, an angle of deflection by the beam deflector (10) for the first signal light, to implement beam alignment, wherein a divergence angle of the first signal light gradually decreases.

2. The optical communication device according to claim 1, wherein the optical communication device further comprises a rotation platform (40) and a motion sensor (50), wherein
the rotation platform (40) is configured to carry the beam deflector (10) and the signal light detector (20);
the motion sensor (50) is configured to detect jitter information of the beam deflector (10) in a process in which the beam deflector (10) receives second signal light from the peer optical communication device, wherein the second signal light carries service information; and
the controller (30) is further configured to control, based on the jitter information, the rotation platform (40) to drive the beam deflector (10) to move to perform jitter compensation, to implement coarse tracking of the second signal light.

3. The optical communication device according to claim 2, wherein
the signal light detector (20) is further configured to detect second position information of the second signal light incident on the signal light detector (20); and
the controller (30) is further configured to adjust, based on the second position information, an angle of deflection by the beam deflector (10) for the second signal light, to implement fine tracking of the second signal light.

4. The optical communication device according to claim 2 or 3, wherein the controller (30) is further configured to control, based on spatial position information of the peer optical communication device, the rotation platform (40) to drive the beam deflector (10) to rotate, to enable the beam deflector (10) to face the peer optical communication device.

5. The optical communication device according to any one of claims 2 to 4, wherein the optical communication device further comprises an optical splitter (60) and a signal light transceiver (70), wherein the optical splitter (60) is configured to transmit a part of the second signal light to the signal light detector (20), and transmit a remaining part of the second signal light to the signal light transceiver (70).

6. The optical communication device according to any one of claims 1 to 5, wherein the optical communication device further comprises a signal light transceiver (70), wherein
the signal light transceiver (70) is configured to provide third signal light to the beam deflector (10); and
the beam deflector (10) is further configured to deflect the third signal light, to send the third signal light to the peer optical communication device, wherein the third signal light is used for performing beam alignment with the peer optical communication device, and a divergence angle of the third signal light gradually decreases.

7. The optical communication device according to claim 6, wherein the signal light transceiver (70) comprises:
a fiber core array (71), configured to provide an initial optical signal;
a collimator (72), configured to collimate the initial optical signal; and
a spatial light modulator (73), configured to modulate the collimated initial optical signal to generate the third signal light.

8. The optical communication device according to claim 6, wherein the signal light transceiver (70) comprises:
a single-mode optical fiber (74), configured to provide an initial optical signal; and
an optical phased array (75), configured to modulate the initial optical signal to generate the third signal light.

9. The optical communication device according to any one of claims 1 to 8, wherein the beam deflector (10) comprises an optical phased array, a fast steering mirror, or a scanning galvanometer.

10. The optical communication device according to any one of claims 1 to 9, wherein the signal light detector (20) comprises a position sensitive detector, a quadrant detector, a charge-coupled device, or a complementary metal oxide semiconductor camera.

11. An optical communication system, comprising the optical communication device according to any one of claims 1 to 10 and a peer optical communication device, wherein the optical communication device communicates with the peer optical communication device through spatial light.

12. An optical communication method, applied to an optical communication device, wherein the optical communication device comprises a beam deflector (10), a signal light detector (20), and a controller (30), and the optical communication method comprises:
receiving, by the beam deflector (10), first signal light from a peer optical communication device, and deflecting the first signal light, to transmit the first signal light to the signal light detector (20);
detecting, by the signal light detector (20), first position information of the first signal light incident on the signal light detector (20); and
adjusting, by the controller (30), based on the first position information, an angle of deflection by the beam deflector (10) for the first signal light, to implement beam alignment, wherein a divergence angle of the first signal light gradually decreases.

13. The optical communication method according to claim 12, wherein the optical communication device further comprises a rotation platform (40) and a motion sensor (50), the rotation platform (40) is configured to carry the beam deflector (10) and the signal light detector (20), and the optical communication method further comprises:
detecting, by the motion sensor (50), jitter information of the beam deflector (10) in a process in which the beam deflector (10) receives second signal light from the peer optical communication device, wherein the second signal light carries service information; and
controlling, by the controller (30), based on the jitter information, the rotation platform (40) to drive the beam deflector (10) to move to perform jitter compensation, so as to implement coarse tracking of the second signal light.

14. The optical communication method according to claim 13, wherein the optical communication method further comprises:
detecting, by the signal light detector (20), second position information of the second signal light incident on the signal light detector (20); and
adjusting, by the controller (30), based on the second position information, an angle of deflection by the beam deflector (10) for the second signal light, to implement fine tracking of the second signal light.

15. The optical communication method according to claim 13 or 14, wherein before receiving, by the beam deflector (10), the first signal light from the peer optical communication device, the optical communication method further comprises:
controlling, by the controller (30), based on spatial position information of the peer optical communication device, the rotation platform (40) to drive the beam deflector (10) to rotate, to enable the beam deflector (10) to face the peer optical communication device.

16. The optical communication method according to any one of claims 12 to 15, wherein the optical communication device further comprises a signal light transceiver (70), and the optical communication method further comprises:
providing, by the signal light transceiver (70), third signal light to the beam deflector (10); and
deflecting, by the beam deflector (10), the third signal light, to send the third signal light to the peer optical communication device, wherein the third signal light is used for performing beam alignment with the peer optical communication device, and a divergence angle of the third signal light gradually decreases.
